# EUROPEAN PATENT APPLICATION

(11) **EP 4 455 535 A1**
(43) Date of publication of application: **30.10.2024**
(21) Application number: 22911613.2
(22) Date of filing: 10.11.2022
(51) Int. Cl.: F17C 1/06, F17C 13/00

(54) **PRESSURE VESSEL WITH SMALL DIAMETER AND LONG AXIS**

(30) Priority: 22.12.2021 KR 20210185344
(71) Applicant: Iljin Hysolus Co., Ltd., Jeollabuk-do 55322 (KR)
(72) Inventor: YOO, Gyehyoung, Wanju-gun Jeollabuk-do 55322 (KR); BACK, Chunho, Wanju-gun Jeollabuk-do 55322 (KR)
(74) Representative: Mammel und Maser Patentanwälte PartG mbB
(86) International application number: PCT/KR2022/017623
(87) International publication number: WO 2023/120975

(57) **Abstract**

A pressure vessel having a small diameter and a long axis is disclosed. The present invention relates to the pressure vessel for providing a fluid-filled space therein, and provides a pressure vessel comprising: a metal boss having a hollow neck part that extends in the axial direction, a dome part that extends from the end of the hollow neck part, and an end portion that extends from the end of the dome part in parallel to the axial direction; and a cylindrical plastic liner having a coupling part that is engaged with and coupled to the metal boss while encompassing the end portion thereof.

## Description

### Technical Field

The present disclosure relates to a pressure vessel having an inner space filled with a high-pressure fluid and, more specifically, to a small-diameter long-axis pressure vessel.

### Background Art

Gas storage vessels are used to store various types of gases such as hydrogen, nitrogen, and natural gas, and to discharge the stored gas as needed. In particular, gases have low storage density in vessels, and thus need to be stored at high pressure. Therefore, pressure vessels are essential in this high-pressure environment.

Pressure vessels are used as storage vessels for gaseous compressed gas fuels in alternative fuel gas vehicles (fuel cell vehicles or compressed natural gas vehicles). Gaseous fuel has low energy storage density and thus needs to be stored at a larger volume or at a higher pressure in order to ensure a longer driving range. In the case of vehicles, the space for mounting a gas storage system is limited, and there are thus constraints on increasing the size of a storage tank. Therefore, it is a necessary to safely store gas at higher pressure whenever possible.

As electrification seems to be a major trend in the future automotive industry, alternative fuel gas vehicles are likely to share electric vehicle platforms. However, in order to install a hydrogen storage system in the battery space of an electric vehicle, a small-diameter pressure vessel having the thickness of the battery is required. To this end, small-diameter long-axis pressure vessels are used. A small-diameter long-axis pressure vessel is a tank having a diameter of 200 mm or less and a length-to-diameter ratio of 4 or more.

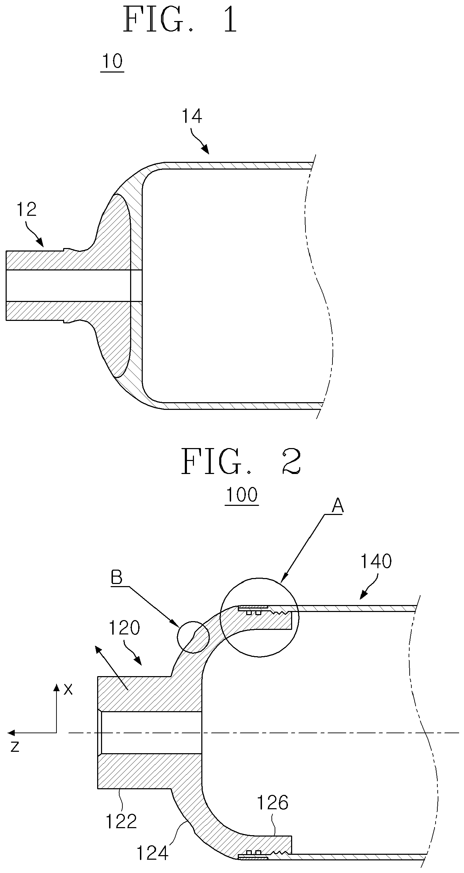

FIG. 1 schematically illustrates a cross-section of a typical conventional pressure vessel.

Referring to FIG. 1, a pressure vessel 10 includes a nozzle boss 12 and a liner 14, wherein the outside of the nozzle boss 12 and the liner 14 is reinforced with carbon fiber, glass fiber, or composite fiber (not shown) wound or laminated thereon. The nozzle boss 12, which forms a hollow neck part, is coupled to the liner 14 via a flanged structure at one end of the nozzle boss.

The liner may be made of metal alone, such as aluminum or steel, or may be made of plastic. A composite pressure vessel made of a metal liner is referred to as Type 3, and a composite pressure vessel made of a non-metal liner is referred to as Type 4.

The plastic liner 14 is coupled at a flange of the nozzle boss 12 to form a dome part, and then extends to form a cylinder part. In this case, the metal boss 12 having the hollow neck part is located in the center of the dome part, and this structure has been manufactured by insert-molding or assembly of the metal boss into the dome-shaped liner. However, in the case of a small-diameter vessel, it is very difficult to apply the conventional manufacturing method of processing a metal boss and insert-molding same into a dome part.

On the other hand, a pressure vessel is manufactured by integrating a structure including a nozzle boss and a dome liner through insert molding or the like, assembling or bonding the same to a cylinder part of a cylindrical liner, and then winding a reinforcing fiber along the outside of the liner. In this case, the liner serves as a mandrel for the winding of the reinforcing fiber. However, in the case of small-diameter long-axis pressure vessels, low-angle winding becomes difficult as the aspect ratio increases.

### Disclosure of Invention

### Technical Problem

To solve the above problems, an aspect of the present disclosure to provide the coupling structure of a metal boss and a liner suitable for manufacturing a small-diameter long-axis pressure vessel without injection molding.

Furthermore, another aspect of the present disclosure is to provide a pressure vessel structure suitable for low-angle winding of a small-diameter long-axis pressure vessel.

### Solution to Problem

To achieve the above technical aspects, the present disclosure provides a pressure vessel having a fluid-filled space therein, the pressure vessel including: a metal boss which includes a hollow neck part extending in an axial direction, a dome part extending from an end of the hollow neck part, and an end part extending parallel to the axial direction from the dome part; and a cylindrical plastic liner including a coupling part that is engaged with and coupled to the end part of the metal boss while surrounding the end part of the metal boss.

In the present disclosure, the metal boss may include a screw part on an outer circumferential surface of the end part, and the coupling part of the liner may include a screw part on an inner circumferential surface thereof, whereby the metal boss and the liner are screwed to each other.

Furthermore, the metal boss may further include an O-ring groove formed at an inner side of the screw part, and may be sealed by an O-ring between the metal boss and the liner.

Furthermore, in the present disclosure, the coupling part of the liner may further include a rigid ring configured to press the plastic liner toward the metal boss along an outer circumference of the coupling part. In this case, the rigid ring is preferably disposed above the O-ring groove.

The invention may further include a winding catching ledge formed on the dome part of the metal boss. The winding catching ledge may be an upward step.

Furthermore, in the present disclosure, the winding catching ledge may have a ring shape continuous along a circumference of the dome part.

In the present disclosure, the pressure vessel may further include a coating layer formed by winding of a reinforcing fiber for reinforcing coupling between the liner and the metal boss, and the coating layer may be configured to cover the winding catching ledge. Furthermore, the coating layer may include a low-angle winding pattern spanning the winding catching ledge. In this case, a low-angle elliptical winding may have an angle of 55 degrees or less, for example, an angle of 54 to 55 degrees with respect to the axis.

### Advantageous Effects of Invention

According to the present disclosure, it is possible to provide a coupling structure of a metal boss and a liner suitable for a small-diameter long-axis pressure vessel.

Furthermore, according to the present disclosure, it is possible to provide a pressure vessel structure that enables the application of a low-angle winding pattern for a small-diameter long-axis pressure vessel.

### Brief Description of Drawings

FIG. 1 schematically illustrates a cross-section of a typical conventional pressure vessel.
FIG. 2 schematically illustrates a cross-section of a pressure vessel according to an embodiment of the present disclosure.
FIGS. 3A and 3B are enlarged cross-sectional views illustrating portions of the pressure vessel in FIG. 2.
FIG. 4 exemplarily illustrates a winding pattern according to one embodiment of the present disclosure.
FIG. 5 schematically illustrates a cross-section of a pressure vessel according to another embodiment of the present disclosure.

### Best Mode for Carrying out the Invention

The terms or words used in the specification and the claims should not be interpreted restrictively according to their ordinary or dictionary meanings, but should be interpreted as meanings and concepts consistent with the technical idea of the present disclosure, based on the principle that the inventor may appropriately define the concepts of the terms in order to to describe his or her invention in the best possible manner. Accordingly, it should be understood that the embodiment described in the specification and the configuration illustrated in the drawings are merely one of the most preferred embodiments of the present disclosure and do not represent all of the technical idea of the present invention, so there may be various equivalents and modifications that can replace them at the time of filing the present invention. Hereinafter, a touch panel and a method of manufacturing the same, according to an embodiment of the present disclosure, will be described in detail with reference to the accompanying drawings.

FIG. 2 is a cross-sectional view of a portion of a pressure vessel according to an embodiment of the present disclosure.

Referring to FIG. 2, a pressure vessel 100 includes a metal boss 120 configured to serve as a passage for filling and discharging a fluid, and a plastic liner 140 coupled to the metal boss 120 to provide a filling space for the fluid in the pressure vessel 100.

Furthermore, the pressure vessel 100 may include a coating layer formed by winding a reinforcing fiber around the outside of the metal boss 120 and the liner 140 after coupling the metal boss 120 and the liner 140 to improve pressure resistance. This will be described later.

The metal boss 120 includes a hollow neck part 122 extending in the longitudinal axis (Z-axis) of the pressure vessel, a dome part 124 extending in the longitudinal direction while expanding in the diameter direction (X-axis) from the end of the neck part 122, and an end part 126 extending parallel to the axial direction from the end of the dome part 124.

In the present disclosure, the dome part 124 may have, for example, a hemispherical shape. In the present disclosure, the liner 140 made of a synthetic resin material is coupled to the end part 126 of the metal boss 120. As illustrated, the liner 140 extends parallel to the Z-axis direction.

The drawing illustrates that the nozzle boss is provided on one side of the pressure vessel 100. However, the metal boss 120 or a similar structure may be provided on the other side of the pressure vessel as necessary. In contrast, a closed metal boss without a hollow neck part may be provided on the other side of the pressure vessel.

In the present disclosure, the outer circumferential surface of the metal boss 120 and the inner circumferential surface of the plastic liner 140 may be coupled to each other through fitting or engaging. To this end, the end part of the metal boss 120 and the coupling part of the plastic liner 140 is equipped with coupling mechanisms.

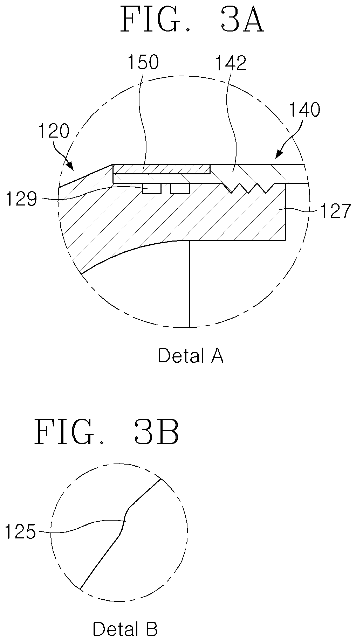

FIG. 3A is an enlarged view illustrating the coupling mechanism of the end part of the metal boss 120.

Referring to FIG. 3A, the outer circumferential surface of the end part 126 of the metal boss 120 is provided with a first screw part 127, and the inner circumferential surface of the liner is provided with a second screw part 142 at a position corresponding to the position at which the first screw part 127 is formed. Accordingly, the liner 140 screws with the metal boss while surrounding the end part 126 of the metal boss.

Meanwhile, in the present disclosure, a portion in which the metal boss 120 is coupled to the liner 140 may be additionally provided with a sealing means to prevent an internal fluid from leaking out between the metal boss and the liner. For example, the inner side of the outer circumferential surface of the metal boss 120 may include an O-ring groove 129, and the space between the metal boss and the liner may be sealed by stably placing an 0-ring in the O-ring groove 129.

Furthermore, in order to assist in the tightness between the metal boss and the liner, a rigid ring 150 for pressing the plastic liner toward the metal boss may be provided at a position corresponding to the position in which the O-ring groove 129 is formed. The rigid ring may press the liner toward the metal boss along the outer circumference of the coupling part of the liner.

In the present disclosure, the rigid ring may be made of a material identical to or different from that of the metal boss. For example, the rigid ring may be made of a metal material such as steel, aluminum alloy, or stainless steel.

FIG. 3A illustrates that on the outer circumferential surface of the end part 126 of the metal boss 120, the O-ring groove 129 is positioned on the inner side of the first screw part 127. However, the reverse is also possible in the present disclosure.

FIG. 3B is an enlarged view of a portion of the dome part of the metal boss 120 in FIG. 2.

Referring to FIG. 3B, the outer surface of the dome part of the metal boss 120 is an overall smooth surface, but a predetermined region corresponding to the center portion of the dome part 124 may be provided with a catching ledge 125. The catching ledge 125 supports a reinforcing fiber that is wound on the curved surface of the dome part to reinforce the coupling strength between the metal boss and the liner in the pressure vessel. Particularly, the catching ledge 125 is advantageous for supporting the reinforcing fiber forming a low-angle winding pattern.

### Mode for Carrying out the Invention

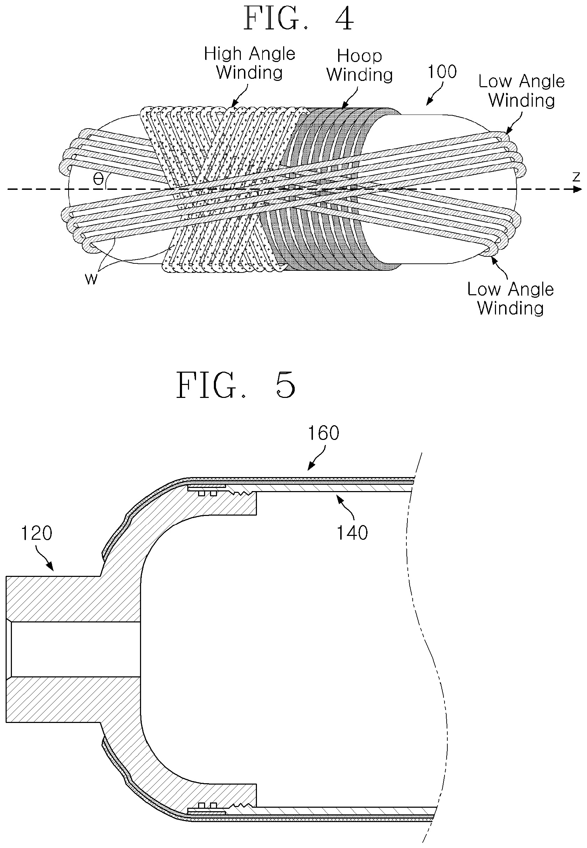

The reinforcing fiber for reinforcing the outer surface of the pressure vessel may be wound in a variety of ways. FIG. 4 exemplarily illustrates a winding pattern of a reinforcing fiber that reinforces the outer surface of pressure vessel 100.

Referring to FIG. 4, the winding pattern includes a hoop winding, which corresponds to the pressure in the X-axis direction and winds around the cylinder part of the pressure vessel, and a helical winding, which corresponds to the pressure in the Z-axis direction, which is the longitudinal direction of the pressure vessel. The helical winding includes a high-angle winding and a low-angle winding depending on the winding angle.

In the specification of the present disclosure, the winding angle refers to an angle θ that a winding pattern formed by a reinforcing fiber (w) and projected onto a two-dimensional plane including the Z axis of the pressure vessel (e.g., the XZ plane), makes with the Z axis. In the specification of the present disclosure, the low-angle winding refers to a winding having a winding angle of 55 degrees or less, or 50 degrees or less, and serves to suppress vessel expansion due to longitudinal pressure.

The winding angle between the dome part and the helical pattern for longitudinal reinforcement is determined by the diameter of the neck part of the nozzle boss, the diameter of the vessel, and the aspect ratio of the vessel. Particularly, in the case of a small-diameter long-axis pressure vessel, as the aspect ratio increases, the winding angle of the helical pattern becomes smaller, making the center portion of the dome part structurally unable to support the winding. Furthermore, in small-diameter long-axis pressure vessel, the angle near 54 to 55 degrees, particularly near 54.75 degrees, is a winding angle which enables reinforcement in both the longitudinal and diametrical directions, and whether the winding pattern of this angle may be formed is a very important factor.

Thus, the catching ledge 125 of the metal boss 120 in the present disclosure supports the reinforcing fiber to enable low-angle winding. In the present disclosure, the catching ledge 125 may have various shapes to support low-angle winding. For example, the catching ledge 125 may be embodied as a step structure, a groove structure, or a protrusion structure on the surface of the dome part. In FIG. 2, the catching ledge 125 is based on a step structure.

In the present disclosure, the catching ledge 125 may be a continuous structure along the circumference of the dome part. For example, when the step structure is continuous along the circumference of the dome, the step structure may have a ring shape. However, in contrast, in the present disclosure, the catching ledge 125 may be implemented as a discontinuous structure, e.g., a discontinuous step along the circumference of the dome part.

In the present disclosure, the catching ledge 125 should have a suitable size to support the reinforcing fiber. For example, when the catching ledge 125 is a step, the height of the step should be preferably at least 2 mm.

FIG. 5 schematically illustrates a cross-section of a pressure vessel according to another embodiment of the present disclosure.

Referring to FIG. 5, a coating layer 160 is formed on the metal boss 120 and the liner 140. The coating layer 160 includes a laminated structure by the winding pattern of the reinforcing fiber described above.

The coating layer 160 may include a reinforcing fiber impregnated with a curable resin. For example, the reinforcing fiber may be a carbon fiber, a glass fiber, or a synthetic polyamide fiber. The curable resin may be, but is not limited to, an epoxy resin or the like.

As illustrated in FIG. 5, the coating layer of the present disclosure covers the catching ledge at the center portion of the dome part, and the metal boss having a catching ledge structure enables winding of the catching ledge and a low-angle region inside the catching ledge.

Although representative embodiments of the present disclosure have been described in detail above, those skilled in the art to which the present disclosure belongs will understand that various modifications to the above-described embodiments may be made without departing from the scope of the present disclosure. Therefore, the scope of the present disclosure should not be limited to the above-described embodiments, but should be determined by the following claims and equivalents of the claims.

### Industrial Applicability

The present disclosure is applicable to gas storage vessels for storing various types of gases, such as hydrogen, nitrogen, natural gas, etc.

## Claims

1. A pressure vessel having a fluid-filled space therein, the pressure vessel comprising:
a metal boss which comprises a hollow neck part extending in an axial direction, a dome part extending from an end of the hollow neck part, and an end part extending parallel to the axial direction from the dome part; and
a cylindrical plastic liner comprising a coupling part that is engaged with and coupled to the end part of the metal boss while surrounding the end part of the metal boss.

2. The pressure vessel of claim 1, wherein the metal boss comprises a screw part on an outer circumferential surface of the end part, and
wherein the coupling part of the liner comprises a screw part on an inner circumferential surface thereof, and the metal boss and the liner are screwed to each other.

3. The pressure vessel of claim 2, wherein the metal boss further comprises an O-ring groove formed at an inner side of the screw part, and is sealed by an O-ring between the metal boss and the liner.

4. The pressure vessel of claim 1, wherein the coupling part of the liner further comprises a rigid ring configured to press the plastic liner toward the metal boss along an outer circumference of the coupling part.

5. The pressure vessel of claim 4, wherein the rigid ring is disposed above the O-ring groove.

6. The pressure vessel of claim 1, further comprising a winding catching ledge formed on the dome part of the metal boss.

7. The pressure vessel of claim 6, wherein the winding catching ledge is an upward step.

8. The pressure vessel of claim 7, wherein the winding catching ledge has a ring shape continuous along a circumference of the dome part.

9. The pressure vessel of claim 6, further comprising a coating layer formed by winding of a reinforcing fiber for reinforcing coupling between the liner and the metal boss,
wherein the coating layer is configured to cover the winding catching ledge.

10. The pressure vessel of claim 1, wherein the coating layer comprises a low-angle winding spanning the winding catching ledge.

11. The pressure vessel of claim 10, wherein a low-angle elliptical winding has an angle of 55 degrees or less with respect to an axis.

12. The pressure vessel of claim 10, wherein the low-angle elliptical winding has an angle of 54 to 55 degrees with respect to the axis.
